# EUROPÄISCHE PATENTSCHRIFT

(11) **EP 2 254 714 B1**
(45) Veröffentlichungstag und Bekanntmachung des Hinweises auf die Patenterteilung: **12.03.2014**
(21) Anmeldenummer: 10708893.2
(22) Anmeldetag: 20.01.2010
(51) Int. Cl.: B21K 1/70, F16B 39/38

(54) **VERFAHREN ZUM HERSTELLEN EINES INNENGEWINDEELEMENTES, INNENGEWINDEELEMENT SOWIE SCHRAUBVERBINDUNG**
METHOD FOR PRODUCING AN INTERNAL THREAD ELEMENT, INTERNAL THREAD ELEMENT, AND SCREW CONNECTION
PROCÉDÉ DE PRODUCTION D'UN ÉLÉMENT TARAUDÉ, ÉLÉMENT TARAUDÉ ET ASSEMBLAGE PAR VISSAGE CORRESPONDANTS

(30) Priorität: 27.01.2009 DE 102009006326
(43) Veröffentlichungstag der Anmeldung: 01.12.2010
(73) Patentinhaber: Flaig, Hartmut, 78554 Aldingen (DE)
(72) Erfinder: HOLSCHER, Winfried, K., W., 78234 Engen (DE)
(74) Vertreter: Wagner, Kilian
(86) Internationale Anmeldenummer: PCT/EP2010/000326
(87) Internationale Veröffentlichungsnummer: WO 2010/086110

(56) Entgegenhaltungen:
- DE-C- 490 889
- US-A- 2 539 899

## Beschreibung

Die Erfindung betrifft ein Verfahren zum Herstellen eines Innengewindeelementes, insbesondere einer Mutter, mit einem ersten Innengewindeabschnitt und einem zweiten Innengewindeabschnitt gemäß dem Oberbegriff des Anspruchs 1, ein nach einem derartigen Verfahren hergestelltes Innengewindeelement gemäß Anspruch 13 sowie eine Schraubverbindung mit einem derartigen Innengewindeelement gemäß Anspruch 15.

Bei herkömmlichen Muttern mit einem einzigen Innengewindeabschnitt besteht das Problem, dass sich die Mutter von einer Schraube mit der Zeit, beispielsweise durch im Betrieb einer mit der Mutter ausgestatteten Vorrichtung auftretenden Schwingungen, etc. lösen kann. Dies kann sicherheitsrelevante Folgen haben.

Zur Vermeidung dieses Nachteils ist aus der DE 490 889 eine Schraubenmutter bekannt geworden, die sich selbständig gegen ein unbeabsichtigtes Lösen sichert. Hierzu weist die bekannte Schraubenmutter zwei in axialer Richtung voneinander beabstandete Innengewindeabschnitte auf, wobei zwischen den Innengewindeabschnitten ein umlaufender, innerer Einstich vorgesehen ist, der durch spanende Bearbeitung hergestellt ist. Die Bremswirkung ist darauf zurückzuführen, dass die beiden Innengewindeabschnitte nach dem Einbringen des Einstichs axial aufeinanderzu bewegt werden, wodurch ein Innengewindesteigungssprung realisiert ist, der dafür sorgt, dass sich die Innengewindeabschnitte beim Verschrauben mit einem gemeinsamen Außengewindeelement im Gewindegang des Außengewindeelementes axial (etwas) verspannen. Nachteilig bei der bekannten Schraubenmutter ist, dass diese notwendigerweise mittels spanender Bearbeitung hergestellt werden muss.

Aus der US2,539,899A (auf die der Oberbegriff des Ansprüche 1 und 13 basiert) ist eine verbesserte Schraubenmutter bekannt, bei der die Bremswirkung ausschließlich durch Umformvorgänge erreicht wird. Hierzu wird bei einem Rohling ein vorderer Innendurchmesserabschnitt, der eine geringere Wandstärke aufweist als ein axial benachbarter Innendurchmesserabschnitt umgebördelt, so dass zwei den gleichen Innendurchmesser aufweisende Innendurchmesserabschnitte erhalten werden. Die beiden Innendurchmesserabschnitte unterscheiden sich hinsichtlich ihrer axialen Länge sowie ihrer Wandstärke. Nachteilig bei der bekannten Schraubenmutter ist, dass diese zum einen nicht zur Aufnahme großer Kräfte und zum anderen nicht zum automatischen Verschrauben mittels Schraubautomaten (Robotern) geeignet ist. Hierzu müsste die bekannte Schraubenmutter definiert orientiert zugeführt werden, um zu bewirken, dass das Bremsmoment immer an der gleichen Position einer mittels der Schraubenmutter herzustellenden Schraubenverbindung wirkt und dass sich die Schraubenmutter mit der "richtigen" Auflagefläche (Abstützfläche) axial abstützt.

Der Erfindung liegt die Aufgabe zugrunde, ein Herstellungsverfahren zum Herstellen eines selbstsichernden Innengewindeelementes, das einerseits zur Aufnahme vergleichsweise großer Kräfte sowie zur Verwendung mit Schraubautomaten geeignet ist, vorzuschlagen. Ferner besteht die Aufgabe darin, ein mit einem derartigen Verfahren hergestelltes Innengewindeelement sowie eine mit einem derartigen Innengewindeelement hergestellte Schraubverbindung anzugeben.

Diese Aufgabe wird hinsichtlich des Herstellungsverfahrens mit den Merkmalen des Anspruchs 1, hinsichtlich des Innengewindeelementes mit den Merkmalen des Anspruchs 13 und hinsichtlich der Schraubverbindung mit den Merkmalen des Anspruchs 15 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale als Verfahrensgemäß offenbart gelten und beanspruchbar sein. Ebenso sollen verfahrensgemäß offenbarte Merkmale als vorrichtungsgemäß offenbart gelten und beanspruchbar sein.

Um eine ein Bremsmoment erzeugende Schraubenmutter (Innengewindeelement) anzugeben, welches vollautomatisiert verschraubbar ist, schlägt die Erfindung vor, das Innengewindeelement, welches gemäß der Erfindung ohne spanende Bearbeitung herstellbar ist, mit zwei identischen, auf voneinander abgewandten Stirnseiten angeordneten, vorzugsweise ringförmigen, Auflageflächen auszustatten, so dass die Flächenpressung unabhängig von der Aufschraubrichtung bzw. der Orientierung des Innengewindeelementes beim Aufschrauben gleich ist. Darüber hinaus schlägt die Erfindung vor, die Innengewindeabschnitte derart herzustellen, dass diese die gleiche Axialerstreckung aufweisen, so dass das Bremsmoment bei einer mit dem erfindungsgemäßen Innengewindeelement herzustellenden Schraubverbindung immer an der gleichen Stelle wirkt. Mit dem aus der US2,539,899A bekannten Verfahren ist ein derartiges Innengewindeelement nicht herstellbar, da durch das Umbördeln eines Axialabschnittes immer ungleich große stirnseitige Auflageflächen resultieren. Darüber hinaus ist die mit dem bekannten Verfahren hergestellte Schraubenmutter nicht zur Aufnahme großer Axialkräfte ausgelegt, was insbesondere auf die geringe Wandstärke im umgebördelten Axialabschnitt zurückzuführen ist. Ganz besonders bevorzugt ist daher eine Weiterbildung des erfindungsgemäßen Innengewindeelementes, gemäß derer in beiden Innengewindeabschnitten die gleiche Materialstärke in radialer Richtung vorgesehen ist und zwar bevorzugt über die gesamte Axialerstreckung der beiden Innengewindeabschnitte. Es wird also eine die Materialstärke verringernde Ringnut, wie diese bei der Ausführungsform gemäß der US2,539,899A realisiert ist, bevorzugt vermieden.

Wesentlich bei der erfindungsgemäßen Lösung ist es zudem, auf einen spanenden Bearbeitungsschritt zur Herstellung einer inneren, die Innengewindeabschnitte trennenden Umfangsnut zu verzichten und stattdessen die Bremsmomentwirkung ausschließlich durch Umformvorgänge zu erreichen. Um dies zu bewerkstelligen, wird in einem ersten Verfahrensschritt ein Rohling durch Pressen, insbesondere Kaltfließpressen, hergestellt, der eine (insbesondere gestufte) Durchgangsöffnung, oder alternativ eine gestufte Sacklochöffnung aufweist, die einen ersten und einen zweiten Innendurchmesserabschnitt aufweist, wobei sich die beiden Innendurchmesserabschnitte hinsichtlich der Größe ihres Innendurchmessers unterscheiden, wobei ein erster Innendurchmesser des Innendurchmesserabschnitts kleiner ist als ein zweiter Innendurchmesser eines zweiten Innendurchmesserabschnitts. Bevorzugt entspricht dieser erste Innendurchmesser dem späteren Kerndurchmesser beider Innengewindeabschnitte.

In die Öffnung (insbesondere Durchgangs- oder Sacklochöffnung) des Rohlings wird in einem zweiten Verfahrensschritt ein stabiler Dorn eingebracht, vorzugsweise derart, dass er im Falle der Ausbildung der Öffnung als Durchgangsöffnung diese durchsetzt. Nach dem Einführen des Dorns wird ein zweiter Pressschritt, vorzugsweise ein zweiter Kaltfließpressschritt, als dritter Verfahrensschritt durchgeführt, bei dem der Rohling derart umgeformt wird, dass beide Innendurchmesserabschnitte nach dem Pressen den gleichen Innendurchmesser aufweisen, wobei dieser Innendurchmesser ganz besonders bevorzugt dem zuvor erwähnten ersten Innendurchmesser des Rohlings entspricht. Dies kann beispielsweise dadurch realisiert werden, dass, wie später noch erläutert werden wird, der Durchmesser des Dorns, zumindest näherungsweise, dem ersten Innendurchmesser des ersten Innendurchmesserabschnitts abzüglich eines minimalen Spiels entspricht, welches das Einführen des Dorns in die Öffnung ermöglicht.

Nach dem vorerwähnten (zweiten) Pressschritt (dritter Verfahrensschritt) wird der Dorn aus der Durchgangsöffnung entnommen und es werden Innengewinde in die beiden Innendurchmesserabschnitte eingebracht, insbesondere gerollt oder geschnitten, wobei es bevorzugt ist, wenn die Innengewinde (ggf. bis auf ihre Axialerstreckung) identisch sind, also sich nicht hinsichtlich der Gewindesteigung, der Gewindeart oder der Gewindegröße unterscheiden. Durch das Einbringen der Innengewinde wurden aus den gewindefreien Innendurchmesserabschnitten die Innengewindeabschnitte realisiert.

Als nächster (vierter) Verfahrensschritt werden die aus den Innendurchmesserabschnitten hergestellten Innengewindeabschnitte relativ zueinander verstellt, wobei das Relativverstellen derart erfolgt, dass nach dem Relativverstellen ein dem zweiten Innengewindeabschnitt zugewandter Gewindegangauslauf des ersten Innengewindeabschnittes bzw. des ersten Gewindes zu einem dem ersten Innengewindeabschnitt zugewandten Gewindegangeinlauf des zweiten Innengewindeabschnittes bzw. des zweiten Gewindes derart positioniert, vorzugsweise beabstandet, ist, dass beim Verschrauben des Innengewindeelementes mit einem Außengewindeelement das Bremsmoment (Haltemoment, Sicherungsmoment) resultiert.

Es ist weiter bevorzugt, wenn die Steigung und die Gewindegröße der beiden Innengewindeabschnitte gleich ist. Ganz besonders bevorzugt weisen beide Innengewindeabschnitte das gleiche Gewinde (z.B. metrisches Gewinde) auf.

Das zuvor beschriebene, nach dem Konzept der Erfindung ausgebildete Herstellungsverfahren kommt - wenn gewünscht - ohne spanende Bearbeitung aus und ermöglicht eine genaue, reproduzierbare sowie kostenoptimierte Herstellung eines selbstsichernden Innengewindeelementes in einer Massenproduktion. Bevorzugt erfolgt das Relativverstellen der beiden Innengewindeabschnitte mit einer definierten Kraft, um eine reproduzierbare Einstellung des Bremsmomentes (Sicherungsmoment, Haltemoment) zu gewährleisten. Die erhaltene Schraubenmutter ist geeignet, große Kräfte aufzunehmen und vollautomatisch verschraubt zu werden.

In Weiterbildung der Erfindung ist mit Vorteil vorgesehen, dass nicht nur die beiden, vorzugsweise jeweils in einer Orthogonalebene zur Längsmittelachse angeordneten Anlageflächen gleich groß und vorzugsweise identisch ausgeformt sind, sondern dass die gesamten Stirnseiten gleich ausgebildet sind. Dabei ist es besonders bevorzugt, wenn das Innengewindeelement (ggf. bis auf die Innengewinde) spiegelsymmetrisch zu einer als Orthogonalebene ausgebildeten Spiegelebene ausgebildet ist, so dass es keinerlei Unterschied macht, in welcher Orientierung das Innengewindeelement mit einem Außengewindeelement verschraubt wird.

Besonders zweckmäßig ist eine Ausführungsvariante, bei der die beiden Innengewindeabschnitte die gleiche Wandstärke aufweisen, wobei die Umfangswände der Innengewindeabschnitte nut- bzw. hohlraumfrei ausgebildet sind, also im Gegensatz zur US2,539,899A nicht eine durch Umbördeln hergestellte Innenringnut aufweisen. Durch die Ausbildung der Umfangswände aus Vollmaterial und der gleichen Dickenwahl bei beiden Innengewindeabschnitten wird eine optimal für das automatische Verschrauben geeignete Bremsmomentschraubenmutter (Sicherungsmoment-Innengewindeelement) bereitgestellt.

Ganz besonders bevorzugt ist eine Ausführungsvariante, bei der beide Innengewindeabschnitte an ihrem Außenumfang die gleiche Kontur aufweisen, also derart ausgeformt werden, dass die Außenkontur der Innengewindeabschnitte symmetrisch ausgebildet wird zu einer gedachten, orthogonal zur Längsmittelachse des Innengewindeelemente verlaufenden Symmetrieebene.

In Weiterbildung der Erfindung ist mit Vorteil vorgesehen, dass es sich bei zumindest einem Pressschritt, vorzugsweise bei sämtlichen Pressschritten, zur Ausbildung des Innengewindeelementes um Kaltfließpressen handelt, dass also der Rohling durch Kaltfließpressen erhalten wird und/oder dass die beiden unterschiedlich bemessenen Innendurchmesserabschnitte durch Kaltfließpressen ausgeformt werden. Bevorzugt werden zusätzlich oder alternativ die, insbesondere ringförmigen, Auflageflächen durch Kaltfließpressen geformt.

Ganz besonders bevorzugt ist es, wenn der im zweiten Verfahrensschritt in die Öffnung des Rohlings eingeführte Dorn, zumindest im Bereich innerhalb der Öffnung, zylindrisch ausgeformt ist. Weiter bevorzugt ist der Dorn formkongruent zu der zum ersten Innendurchmesserabschnitt gehörigen Öffnung ausgeformt.

Besonders zweckmäßig ist es, wenn der verwendete Dorn, wie eingangs bereits angedeutet, einen Durchmesser aufweist, der im Wesentlichen dem ersten Innendurchmesser des ersten Innendurchmesserabschnittes entspricht.

In Weiterbildung der Erfindung ist mit Vorteil vorgesehen, dass das Pressen (dritter Verfahrensschritt) des Rohlings mit in der Öffnung aufgenommenem Dorn derart erfolgt, dass die Innendurchmesserabschnitte nach dem Pressen und vor dem Relativverstellen der Innengewindeabschnitte zueinander axial voneinander beabstandet sind. Ganz besonders bevorzugt erfolgt das Pressen derart, dass zwischen den Innendurchmesserabschnitten (nach dem Pressen) eine Umfangsnut realisiert ist, die noch weiter bevorzugt in radialer Richtung nach außen spitz zuläuft und noch weiter bevorzugt im Querschnitt dreieckig konturiert ist, wobei auch alternative Querschnittsformen realisierbar sind. Die Umfangsnut gewährleistet eine gewisse Federwirkung in axialer Richtung und ermöglicht das vorerwähnte Relativverstellen der Innendurchmesserabschnitte zueinander, um hiermit das gewünschte Bremsmoment einzustellen.

Besonders zweckmäßig ist eine Ausführungsform des Verfahrens, bei der der durch das Pressen, insbesondere Kaltfließpressen, erhaltene Rohling derart ausgeformt ist, dass axial zwischen dem ersten und dem zweiten Innendurchmesserabschnitt, die jeweils bevorzugt eine kreisrund konturierte innere Öffnung aufweisen, ein sich in Richtung des ersten Innendurchmesserabschnittes verjüngender Axialabschnitt vorgesehen ist, der sich noch weiter bevorzugt konisch verjüngt. Bei einem derart ausgestalteten Rohling ist zu beobachten, dass der Rohling beim Pressvorgang im Übergang zwischen dem sich verjüngenden Abschnitt und dem zweiten Innendurchmesserabschnitt beim Pressen einknickt bzw. (insbesondere Stahl) derart fließt, dass die beiden Innendurchmesserabschnitte axial entweder - je nach Pressintensität - stirnseitig unmittelbar aneinander anliegen oder zwischen sich die zuvor beschriebene Umfangsnut begrenzen. Bei einer alternativen Ausführungsform ist kein sich verjüngender Axialabschnitt zwischen den Innendurchmesserabschnitten vorgesehen, sondern die unterschiedliche Innendurchmesser aufweisenden Innendurchmesserabschnitte grenzen unmittelbar aneinander an, so dass eine Art Treppenstufe realisiert ist. Auch ist es möglich, als Übergang einen Axialabschnitt vorzusehen, der keinen konischen, sondern einen anderen, beispielsweise konkaven oder konvexen Verlauf aufweist.

Wie zuvor bereits angedeutet, gibt es unterschiedliche Möglichkeiten, die Innengewindeabschnitte relativ zueinander zu verstellen, um die Selbstsicherungsfunktion herzustellen. Ganz besonders bevorzugt werden die Innengewindeabschnitte hierzu axial aufeinander zugestellt. Zusätzlich oder alternativ zu einem axialen Verstellen ist ein Tordieren, also ein Relativverstellen der Innengewindeabschnitte in Umfangsrichtung möglich. Besonders bevorzugt ist eine Ausführungsform des Innengewindeelementes, bei der das Bremsmoment dadurch realisiert wird, dass der erste Innengewindeabschnitt derart von einem Gewindegangeinlauf des zweiten, axial benachbarten Innengewindeabschnitts beabstandet ist, dass ein Gewindesteigungssprung zwischen den Innengewindeabschnitten bzw. zwischen deren Gewinden realisiert ist. Anders ausgedrückt sind die beiden, vorzugsweise die gleiche Gewindesteigung aufweisenden, Innengewindeabschnitte derart positioniert, dass die Gewindegänge der Innengewindeabschnitte nicht exakt in Gewindegangrichtung miteinander fluchten, so dass, sobald der zweite Innengewindeabschnitt mit einem gemeinsamen Außengewindeelement in Wechselwirkung tritt, aufgrund der Verspannung zwischen den Gewindegängen beim Einschrauben ein Bremsmoment resultiert.

Der Gewindegangsprung kann beispielsweise dadurch realisiert werden, dass der Gewindegangauslauf des ersten Innengewindeabschnittes entsprechend weit axial von dem Gewindegangeinlauf des zweiten Innengewindeabschnittes beabstandet ist. Bevorzugt wird bei der Herstellung durch ein axiales Relativverstellen der Innengewindeabschnitte zueinander automatisch ein Versatz des Gewindegangauslaufs des ersten Innengewindeabschnittes zum Gewindegangeinlauf des zweiten Innengewindeabschnittes in Umfangsrichtung erreicht. Es resultiert also ein Innengewindesprung, bei dem die Umfangsmitten des Gewindegangsauslaufs des ersten Innengewindeabschnitts in Umfangsrichtung zu der Umfangsmitte des Gewindegangeinlaufs des zweiten Innengewindeabschnitts versetzt ist. Auch ist es möglich, die Innengewindeabschnitte bei der Herstellung des Innengewindeelementes relativ zueinander zu tordieren und dadurch den Gewindegangauslauf des ersten Innengewindeabschnittes relativ zu dem Gewindegangeinlauf des zweiten Innengewindeabschnittes in Umfangsrichtung zu versetzen. Über die Wahl der Größe des Axialversatzes und/oder des Versatzes in Umfangsrichtung kann die Größe des Bremsmomentes eingestellt werden. Bevorzugt werden die Innengewindeabschnitte bei der Herstellung des Innengewindeelementes derart relativ zueinander positioniert, dass der eingestellte axiale Abstand zwischen den Innengewindeabschnitten, genauer zwischen einem Gewindegangauslauf des ersten Innengewindeabschnittes und einem Gewindegangeinlauf eines zweiten Innengewindeabschnittes nicht exakt der Gewindesteigung der Innengewindeabschnitte und nicht exakt einem ganzzahligen Vielfachen der Gewindesteigung der Innengewindeabschnitte entspricht. Wäre dies der Fall, könnte das Innengewindeelement ohne die Wirkung eines Bremsmomentes mittels beider Innengewindeabschnitte mit einem Außengewindeelemente verschraubt werden. Bei der Gewindesteigung handelt es sich um den axialen Weg, durch den ein Innengewindeabschnitt bei einer ganzen Umdrehung des Innengewindeelementes axial relativ zu einem Außengewindeelement verstellt wird.

Ganz besonders bevorzugt ist eine Ausführungsform des Innengewindeelementes, bei der die beiden Innengewindeabschnitte jeweils ein metrisches Innengewinde umfassen.

Die Erfindung führt auch auf ein Innengewindeelement, das mit einem wie zuvor beschrieben ausgebildeten Verfahren hergestellt ist. Bevorzugt zeichnet sich das Innengewindeelement dadurch aus, dass die Bremsmomentwirkung nicht durch spanende Bearbeitung erreicht ist. Noch weiter bevorzugt ist zwischen beiden Innengewindeabschnitten des Innengewindeelementes eine nicht durch spanende Bearbeitung hergestellte, innere Umfangsnut vorgesehen. Das erfindungsgemäße Innengewindeelement zeichnet sich dadurch aus, dass die beiden axial benachbarten Innengewindeabschnitte die gleiche Axialerstreckung aufweisen, und dass die beiden, vorzugsweise ringförmigen, Auflageflächen, mit denen das Innengewindeelement axial gegen ein Widerlager verschraubbar ist, gleich groß sind. Hierdurch eignet sich das erfindungsgemäße Innengewindeelement (Schraubenmutter) hervorragend zur automatischen Verarbeitung bzw. zur Verwendung mit Schraubautomaten, ohne dass es notwendig wäre, das Innengewindeelement zunächst korrekt zu orientieren. Die Erfindung führt also auf ein Bremsinnengewindeelement (Sicherungsinnengewindeelement), welches vollautomatisch verschraubbar ist.

Ganz besonders bevorzugt ist es, wenn die Breite der Umfangsnut an einer Stelle der maximalen Nutbreite, vorzugsweise am radial innersten Bereich der Umfangswand, aus einem Wertebereich zwischen etwa 0,1 mm und etwa 1 mm, vorzugsweise aus einem Wertebereich zwischen etwa 0,3mm und etwa 0,7mm, gewählt ist. Anders ausgedrückt ist die maximale Axialerstreckung der Umfangsnut, die die beiden Innengewindeabschnitte voneinander trennt, aus dem zuvor erwähnten Wertebereich gewählt. Ein derartig geringer Nutquerschnitt ist durch spanende Bearbeitung kaum realisierbar. Ein Innengewindeelement mit einer solch schmalen Umfangsnut zwischen den Innengewindeabschnitten zeichnet sich durch eine minimierte Axialerstreckung aus bzw. durch eine erhöhte Anzahl tragender, d.h. belastbarer Gewinderillen auf einer gegebenen Axialerstreckung.

Besonders zweckmäßig ist eine Ausführungsvariante des Innengewindeelementes, bei der die Umfangswand im Bereich des Nutgrundes, d.h. an der tiefsten Stelle der Umfangsnut, d.h. an der dünnsten Umfangswandstelle nur etwa 20% bis etwa 75% der Umfangswanddicke des Innengewindeelementes im Bereich der Innengewindeabschnitte beträgt. Ganz besonders bevorzugt beträgt die Dicke, d.h. die Radialerstreckung der Umfangswand am Nutgrund nur etwa 25% bis etwa 70%, ganz besonders bevorzugt 35% bis 65%, der Wandstärke der Umfangswand der Innengewindeabschnitte.

Ganz besonders bevorzugt ist es, wenn die Wandstärke der Umfangswand am Nutgrund, d.h. die Dicke der verbleibenden Umfangswand am Nutgrund so gewählt ist, dass das Innengewindeelement beim Verschrauben mit einem korrespondierenden Außengewindeelement ein elastisches Verhalten zeigt, vorzugsweise derart, dass das Innengewindeelement um eine Länge aus einem Wertebereich zwischen etwa 0,1 mm und etwa 0,3mm elastisch streckbar ist. Hierdurch wird das Innengewindeelement vielfach verwendbar. Ein Fressen bei einer das erfindungsgemäße Innengewindeelement umfassenden Schraubverbindung wird somit vermieden. Durch die elastische Dehnung beim Verschrauben mit einem Außengewindeelement wird das Spiel aus der Schraubenverbindung genommen, woraus das gewünschte Bremsmoment resultiert. Ganz besonders bevorzugt ist es zur Erzielung der elastischen Wirkung, wenn, wie zuvor erwähnt, die Wandstärke der Umfangswand am Nutgrund 20% bis etwa 75%, vorzugsweise nur etwa 25% bis etwa 70%, noch weiter bevorzugt nur etwa 35% bis etwa 65% der Wandstärke der Umfangswand im Bereich der Innengewindeabschnitte beträgt.

Darüber hinaus führt die Erfindung auf eine Schraubverbindung, umfassend ein wie zuvor beschrieben ausgebildetes Innengewindeelement, das mit seinen beiden Innengewindeabschnitten mit einem gemeinsamen Außengewindeelement verschraubt ist. Bevorzugt ist dabei zwischen beiden Innengewindeabschnitten ein Gewindesteigungssprung realisiert, so dass es ab dem Moment des Einschraubens des zweiten Innengewindeabschnittes in das Außengewindeelement zu axialen Verspannungen in den Gewindegängen kommt.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: in einer schematischen Darstellung ein Ausführungsbeispiel eines Innengewindelementes mit zwei axial über eine innere Umfangsnut voneinander beabstandeten Innengewindeabschnitten, wobei ein Gewindegangauslauf des ersten Innengewindeabschnittes ausschließlich durch axiales Verstellen der Innengewindeabschnitte relativ zueinander in Umfangsrichtung zu einem axial beabstandeten Gewindegangeinlauf des zweiten Innengewindeabschnittes versetzt ist,
- Fig. 2a bis Fig. 2c:: unterschiedliche Verfahrensschritte eines bevorzugten Herstellungsverfahrens zur Herstellung des in Fig. 1 beispielhaft dargestellten Innengewindeelementes, und
- Fig. 3:: in einer schematischen Darstellung eine Schraubverbindung mit einem als Mutter ausgebildeten Innengewindeelement.

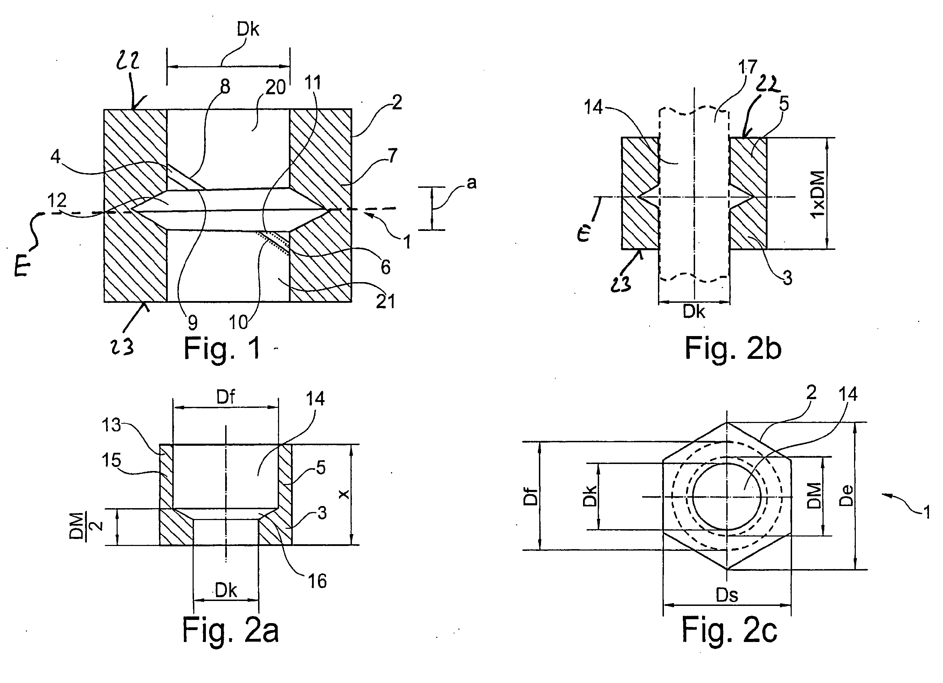

In Fig. 1 ist ein Innengewindeelement 1 gezeigt. Das Innengewindeelement ist als Schraubenmutter (Mutter) ausgebildet und umfasst an seinem Außenumfang (Mantelfläche) Schlüsselflächenpaare 2.

Wie sich aus Fig. 1 ergibt, ist das Innengewindeelement 1 mit einem ersten Innengewindeabschnitt 20, aufweisend ein erstes Innengewinde 4 ausgestattet. Axial benachbart, hier beabstandet, zu dem ersten Innengewindeabschnitt 20 ist ein zweiter Innengewindeabschnitt 21 mit einem zweiten Innengewinde 6 angeordnet. Beide Innengewinde 4, 6 sind identisch, d.h. sie weisen die gleiche Gangrichtung, die gleiche Steigung sowie die gleiche Gewindegröße auf. Die Innengewindeabschnitte 20, 21 werden durch Einbringung der Innengewinde 4, 6 hergestellt. Wie sich aus Fig. 1 weiterhin ergibt, ist die jeweilige Axialerstreckung der Innengewindeabschnitte 20, 21 identisch. Ferner ist die Dickenerstreckung (Radialerstreckung) der Umfangswände der Innengewindeabschnitte 20, 21 identisch. Die Umfangswände bestehen aus Vollmaterial, weisen also keine sich in axialer Richtung erstreckende Ringnut auf, wie dies bei dem Innengewindeelement gemäß der US,2,539,899A der Fall ist.

Zu erkennen ist ferner, dass das Innengewindeelement 1 - ggf. mit Ausnahme der Innengewinde - symmetrisch zu einer als Orthogonalebene ausgebildeten Spiegelebene E ausgebildet ist, die sich senkrecht zu einer Längsmittelachse des Innengewindeelementes 1 erstreckt.

Darüber hinaus sind die beiden, voneinander abgewandten Auflageflächen 22, 23 (Abstützflächen), mit denen sich das Innengewindeelement 1 in axialer Richtung abstützen kann, gleich groß. In dem gezeigten Ausführungsbeispiel ist darüber hinaus die Ausformung der gesamten, voneinander abgewandten Stirnseiten identisch.

Das gezeigte, nach dem Konzept der Erfindung ausgebildete Innengewindeelement (Sicherungsinnengewindeelement) ist optimal zur Verwendung mit Schraubautomaten geeignet.

Wie sich darüber hinaus aus Fig. 1 ergibt, ist der Innenmesser (Kern- sowie Flankendurchmesser) der beiden Innengewindeabschnitte 20, 21 identisch. Die Innengewindeabschnitte 20, 21 sind beide an dem einteiligen Innengewindeelement 1 ausgebildet und über einen ringförmigen Verbindungsabschnitt 7 (Materialschwächungsabschnitt) einteilig miteinander verbunden. Der Verbindungsabschnitt 7 weist eine geringere Wandstärke auf als die Innengewindeabschnitte 20, 21, wobei die Größe der Wandstärke des Verbindungsabschnitts 7 die Federwirkung des Verbindungsabschnittes 7 in axialer Richtung bestimmt.

Das erste Innengewinde 4 des ersten Innengewindeabschnittes 20 umfasst einen aus Übersichtlichkeitsgründen nur teilweise dargestellten ersten Gewindegang 8, umfassend einen Gewindegangauslauf 9. Das zweite Innengewinde 6 des zweiten Innengewindeabschnittes 21 umfasst einen ebenfalls nur ausschnittsweise dargestellten zweiten Gewindegang 10 mit einem dem ersten Innengewinde 20 zugewandten Gewindegangeinlauf 11. Der Gewindegangauslauf 9 des ersten Innengewindeabschnittes 20 ist derart zu dem Gewindegangeinlauf 11 des zweiten Innengewindeabschnittes 21 positioniert, dass beim Verschrauben der Innengewindeabschnitte 20, 21 mit einem nicht dargestellten Außengewindeelement ein Bremsmoment resultiert.

Wie sich aus Fig. 1 ergibt, ist zwischen den Gewindegängen 8, 10 der Innengewindeabschnitte 20, 21 ein Gewindesteigungssprung realisiert. Ohne Gewindesteigungssprung würde der zweite Gewindegang 10, wie strichliert angedeutet, in Gewindegangrichtung mit dem ersten Gewindegang 8 fluchten, und es würde beim Verschrauben der Innengewindeabschnitte 20, 21 mit einem Außengewindeelement kein Bremsmoment resultieren. Der Abstand a zwischen dem Gewindegangauslauf 9 des ersten Innengewindeabschnittes 20 und dem Gewindegangeinlauf 11 des zweiten Gewindeganges 10 differiert (etwas) von der Steigung der Gewindegänge 8, 10, so dass beim Verschrauben der Innengewindeabschnitte 20, 21 mit einem Außengewindeelement eine Verspannung in axialer Richtung auftritt und somit ein Brems-, d.h. Sicherungsmoment (Haltemoment) resultiert. Wie sich aus Fig. 1 ergibt, befinden sich die Umfangsmitten des Gewindegangauslaufs 9 und des Gewindegangeinlaufs 11 nicht exakt auf demselben Umfangswinkel, sondern sind in Umfangsrichtung (etwas) zueinander versetzt angeordnet, wodurch der vorerwähnte Gewindesteigungssprung realisiert ist.

Die in Fig. 1 gezeigte Relativpositionierung der Gewindegänge 8, 10 der Innengewindeabschnitte 20, 21 relativ zueinander ist durch Relativverstellen, hier durch Aufeinanderzuverstellen realisiert. Dieses Relativverstellen wurde durch das Vorsehen der querschnittlich dreieckig konturierten Umfangsnut 12 möglich, die die Innengewindeabschnitte 20, 21 axial zueinander beabstandet. Die Umfangsnut 12 wurde ausschließlich durch Umformen, nicht, wie später noch erläutert werden wird, durch spanende Bearbeitung hergestellt. Die Umfangswand weist eine maximale Breite a, d.h. eine Axialerstreckung an der breitesten Nutstelle aus einem Wertebereich zwischen etwa 0,1 mm und etwa 1 mm auf, besonders bevorzugt von etwa 0,5mm.

Im Folgenden wird anhand der Fig. 2a bis 2c ein bevorzugtes Herstellungsverfahren zur Herstellung eines in der Art wie in Fig. 1 gezeigt ausgebildeten Innengewindeelementes 1 beschrieben.

Die Wandstärke, d.h. die Radialerstreckung der Umfangswand in der Mitte des Verbindungsabschnittes 7, d.h. am Nutgrund der Umfangsnut 12 zwischen den Innengewindeabschnitten 20, 21 beträgt bevorzugt nur etwa 20% bis 70% der maximalen Wandstärke der Umfangswand 15, d.h. der Umfangswand 15 im Bereich der Innengewindeabschnitte 20, 21.

In einem ersten Verfahrensschritt wird aus Stahl durch Pressen, hier auch Kaltfließpressen, der in Fig. 2a dargestellte Rohling 13 hergestellt. Der Rohling 13 weist eine als Durchgangsöffnung ausgebildete Öffnung 14 auf, die bei einer alternativen, nicht dargestellten Ausführungsvariante beispielsweise auch als Sacklochöffnung ausgebildet sein kann. Die Öffnung 14 bzw. der Rohling 13 kann unterteilt werden in zwei Innendurchmesserabschnitte 3, 5, die in dem gezeigten Ausführungsbeispiel axial voneinander beabstandet sind und die sich hinsichtlich der Größe ihrer Innendurchmesser unterscheiden. So weist der zweite Innendurchmesserabschnitt 5 einen größeren Durchmesser D_{f} auf als der erste Innendurchmesserabschnitt 3 mit einem Innendurchmesser Dₖ, wobei der erste Innendurchmesser Dₖ des ersten Innendurchmesserabschnittes dem Kerndurchmesser Dₖ des fertigen Innengewindeelementes 1 (vgl. Fig. 1) entspricht. Die beiden Innendurchmesserabschnitte 3, 5 unterscheiden sich auch hinsichtlich der Wandstärke der die Öffnung 14 begrenzenden Umfangswand 15. Zu erkennen ist, dass die Wandstärke der Umfangswand 15 im Bereich des ersten Innendurchmesserabschnittes 3 größer ist, hier mehr als dreimal so groß ist, als die Wandstärke der Umfangswand 15 im Bereich des zweiten Innendurchmesserabschnittes 5.

Bevorzugt beträgt die Wandstärke, d.h. die Radialerstreckung der Umfangswand 15 des ersten Innendurchmesserabschnittes 3 nur etwa 20% bis etwa 75%, vorzugsweise etwa 25% bis etwa 70%, der Wandstärke der Umfangswand 15 des zweiten Innendurchmesserabschnittes 5. Noch weiter bevorzugt ist es, wenn die Radialerstreckung, d.h. die Wandstärke der Umfangswand 15 im Bereich des ersten Innendurchmesserabschnittes 3 etwa 35% bis 60% der Wandstärke der Umfangswand 15 des zweiten Innendurchmesserabschnittes 5 beträgt. Ganz besonders bevorzugt ist die Umfangswand 15 im ersten Innendurchmesserabschnitt 3 etwa nur halb so dick wie die Umfangswand 15 im zweiten Innendurchmesserabschnitt 5.

Wie sich aus Fig. 2a ergibt, ist axial zwischen den Innendurchmesserabschnitten 3, 5 des Rohlings 13 ein Axialabschnitt 16 vorgesehen, wobei sich der Innendurchmesser des Axialabschnittes 16 ausgehend vom Innendurchmesser D_{f} hin bis zum Innendurchmesser Dₖ stetig verringert. Anders ausgedrückt ist axial zwischen den Innendurchmesserabschnitten 3, 5 ein sich hier konisch verjüngender Axialabschnitt 16 vorzusehen, dessen Innendurchmesser vom zweiten Innendurchmesserabschnitt 5 hin zum ersten Innendurchmesserabschnitt 3 abnimmt. Aus Fig. 2a ergibt sich weiterhin, dass die Axialerstreckung des ersten Innendurchmesserabschnittes zuzüglich des Axialabschnittes 16 in dem gezeigten Ausführungsbeispiel D_{M}/2 entspricht, also dem halben Gewindeflankendurchmesser D_{M} (vgl. Fig. 2b). Die Axialerstreckung des zweiten Innendurchmesserabschnittes 5 ist größer, hier in etwa doppelt so groß wie die Axialerstreckung des ersten Innendurchmesserabschnittes 3.

In die Öffnung 14 des Rohlings 13 gemäß Fig. 2a wird in einem darauffolgenden Verfahrensschritt ein, beispielsweise wie in Fig. 2b andeutungsweise dargestellt ausgebildeter zylindrischer Dorn 17 eingeführt, wobei der Außendurchmesser des Dorns 17 im Wesentlichen dem Innendurchmesser Dₖ der Öffnung 14 innerhalb des ersten Innendurchmesserabschnittes 3 entspricht, so dass die innere Umfangswand des ersten Innendurchmesserabschnittes 3 am Außenumfang des Dorns 17 anliegt, wohingegen ein vergleichsweise breiter Radialspalt zwischen dem zweiten Innendurchmesserabschnitt 5 bzw. dem Innenumfang des zweiten Innendurchmesserabschnittes 5 und dem Außenumfang des Dorns 17 realisiert ist. Dieser Freiraum wird bei dem darauffolgenden Pressschritt ausgefüllt vom Material der Umfangswand 15, was in diesen Bereich hineinfließt, so dass das in Fig. 2b dargestellte Zwischenstadium erreicht wird, in welchem bereits eine Umfangsnut zwischen den Innendurchmesserabschnitten 3, 5 realisiert ist, welche in diesem Zwischenzustand bereits die gleichen Innendurchmesser, hier den (späteren) Kerndurchmesser Dₖ aufweisen.

In einem darauffolgenden Verfahrensschritt wird in die Innendurchmesserabschnitte 3, 5 mit den gleich großen Innendurchmessern, beispielsweise durch Rollieren jeweils ein Innengewinde 4. 6 eingebracht, vorzugsweise in beiden Innendurchmesserabschnitten 3, 5 in demselben Arbeitsgang, insbesondere mit einer gemeinsamen Rollierwalze. Hierdurch werden aus den Innendurchmesserabschnitten 3, 5 die in Fig. 1 gezeigten Innengewindeabschnitt 20, 21 geschaffen. Nach dem Einbringen des Innengewindes könnte das Innengewindeelement ohne die Realisierung des gewünschten Bremsmomentes auf ein Außengewindeelement aufgeschraubt werden.

Wie sich aus Fig. 2b ergibt, weisen die beiden Innendurchmesserabschnitte 3, 5 bereits die selbe Axialerstreckung auf. Auch sind die Wandstärken der Umfangswände der beiden Innendurchmesserabschnitte identisch gewählt. Das in Fig. 2b dargestellte Bauteil ist vollkommen symmetrisch zur Spiegelebene E und weist bereits identisch ausgeformte, stirnseitige Auflageflächen auf.

Zur Realisierung der Selbstsicherungsfunktion werden in einem weiteren Verfahrensschritt die Innengewindeabschnitte 20, 21 relativ zueinander verstellt, insbesondere durch axiales Relativverstellen und/oder relatives Tordieren, wobei es besonders bevorzugt ist, wenn die Relativverstellung ausschließlich durch axiales Verstellen aufeinander zu erfolgt. Dabei werden die Innengewindeabschnitte 20, 21 hierdurch mit einer definierten Axialkraft beaufschlagt, vorzugsweise unter Zuhilfenahme einer Kolbenzylindereinheit, vorzugsweise einer hydraulischen Kolbenzylindereinheit.

Fig. 2c zeigt ein fertiges Innengewindeelement 1 in einer Draufsicht. Zu erkennen sind die am Außenumfang vorgesehenen Schlüsselflächenpaare 2 (Sechskantantrieb) (alternative Antriebe realisierbar) sowie die als Durchgangsöffnung ausgebildete Öffnung 14 mit dem gleichen Kerndurchmesser Dₖ in beiden Innendurchmesserabschnitten. Eingezeichnet ist auch der Gewindeflankendurchmesser D_{M} sowie der maximale Innendurchmesser D_{f} der Umfangsnut 12, wobei dieser Durchmesser D_{f} der Umfangsnut 12 dem ursprünglichen Innendurchmesser der Öffnung 14 innerhalb des zweiten Innendurchmesserabschnittes 5 (vg. Fig. 2b) entspricht. Zu erkennen ist auch der maximale Außendurchmesser Dₑ sowie die Schlüsselweite Dₛ.

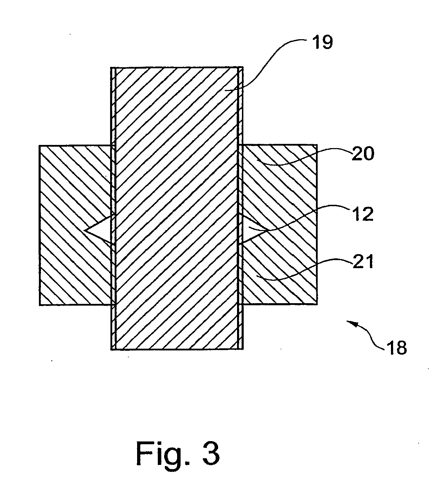

In Fig. 3 ist eine Schraubverbindung 18 gezeigt. Diese umfasst ein Außengewindeelement 19, welches mit beiden Innengewindeabschnitten 20, 21 des Innengewindeelementes 1 verschraubt ist, wobei die Innengewindeabschnitte 20, 21 derart voneinander beabstandet sind (vgl. Fig. 1), dass beim Verschrauben ein Bremsmoment (Haltemoment, Sicherungsmoment) wirkt. Besonders gut aus der Schnittansicht gemäß Fig. 3 wird die ausschließlich durch Umformen hergestellte innere Umfangsnut 12 ersichtlich.

### Bezugszeichenliste

- 1: Innengewindeelement
- 2: Schlüsselpaare
- 3: erster Innendurchmesserabschnitt
- 4: erstes Innengewinde
- 5: zweiter Innendurchmesserabschnitt
- 6: zweites Innengewinde
- 7: Verbindungsabschnitt
- 8: Gewindegang
- 9: Gewindegangauslauf
- 10: Gewindegang
- 11: Gewindegangeinlauf
- 12: Umfangsnut
- 13: Rohling
- 14: Öffnung
- 15: Umfangswand
- 16: Axialabschnitt
- 17: Dorn
- 18: Schraubverbindung
- 19: Außengewindeelement
- 20: erster Innengewindeabschnitt
- 21: zweiter Innengewindeabschnitt
- 22: Auflagefläche
- 23: Auflagefläche

- a: Breite
- Dₑ: Außendurchmesser
- D_{f}: zweiter Innendurchmesser
- Dₖ: Kerndurchmesser (erster Innendurchmesser)
- D_{M}: Gewindeflankendurchmesser
- Dₛ: Schlüsselweite
- E: Spiegelebene

## Patentansprüche

1. Verfahren zum Herstellen eines Innengewindeelementes (1) mit einem ersten Innengewindeabschnitt (20) und mit einem zweiten Innengewindeabschnitt (21), der derart zu dem ersten Innengewindeabschnitt (20) positioniert ist, dass beim gemeinsamen Verschrauben der beiden Innengewindeabschnitte (20, 21) mit einem Außengewindeelement (19) ein Bremsmoment resultiert,
wobei die folgenden Verfahrensschritte ausgeführt werden:
• Herstellen eines Rohlings (13) durch Pressen, welcher eine als Durchgangsöffnung ausgebildete, Öffnung (14) aufweist, die einen ersten Innendurchmesserabschnitt (3) mit einem ersten Innendurchmesser (Dk) und einen zweiten Innendurchmesserabschnitt (5) mit einem zweiten Innendurchmesser (Df) aufweist, der größer ist als der erste Innendurchmesser (Dk), und
• Einführen eines Dorns (17) in die Öffnung (14), und
• Pressen des Rohlings (13), derart, dass der erste und der zweite Innendurchmesserabschnitt (3, 5) nach dem Pressen einen gleichen, vorzugsweise den ersten, Innendurchmesser (Dk) aufweisen, und derart, dass zwischen dem ersten und zweiten Innendurchmesserabschnitt (3,5) nach dem Pressen eine Umfangsnut (12) realisiert ist, und
• Herausnahme des Dorns (17) aus der Öffnung (14), und
• Einbringen eines ersten Innengewindes (4) in den ersten Innendurchmesserabschnitt (3) sowie Einbringung eines zweiten Innengewindes (6) in den zweiten Innendurchmesserabschnitt (5), und dadurch Herstellen der Innengewindeabschnitte (20,21), wobei die, vorzugsweise metrischen, Innengewinde (6) des ersten und des zweiten Innengewindeabschnitts (20, 21) mit der gleichen Steigung und der gleichen Gewindegröße und der gleichen Gangrichtung hergestellt werden,
• Relativverstellen der Innengewindeabschnitte (20, 21) zueinander, derart, dass ein Gewindegangauslauf (9) des ersten Innengewindeabschnittes (20) derart relativ zu einem Gewindegangeinlauf (11) des zweiten Innengewindeabschnittes (21) positioniert wird, dass beim Verschrauben des an jeder Stirnseite eine Auflagefläche (22, 23) aufweisenden Innengewindeelementes (1) mit einem Außengewindeelement (19) das Bremsmoment resultiert,
**dadurch gekennzeichnet,**
**dass** die Innengewindeabschnitte (20, 21) mit der gleichen Axialerstreckung und die stirnseitigen Auflageflächen (22, 23) gleich groß hergestellt werden.

2. Verfahren nach Anspruch 1,
**dadurch gekennzeichnet,**
**dass** das Innengewindeelement (1) mit zwei voneinander abgewandten identischen Stirnseiten ausgebildet wird.

3. Verfahren nach einem der Ansprüche 1 oder 2,
**dadurch gekennzeichnet,**
**dass** die Wandstärken der aus Vollmaterial ausgebildeten Umfangswände der beiden Innengewindeabschnitte (20, 21) gleich sind.

4. Verfahren nach einem der vorhergehenden Ansprüche,
**dadurch gekennzeichnet,**
**dass** der Rohling (13) derart gepresst wird, dass die Außenkontur der Innengewindeabschnitte (20, 21) symmetrisch zu einer gedachten, orthogonal zur Längsmittelachse verlaufenden Symmetrieebene (E) ist.

5. Verfahren nach einem der Ansprüche 1 bis 4,
**dadurch gekennzeichnet,**
**dass** der Rohling durch Kaltfließpressen hergestellt wird und/oder dass der Rohling zur Ausbildung der Innendurchmesserabschnitte (3, 5) mit gleicher Axialerstreckung kaltfließgepresst wird.

6. Verfahren nach einem der vorhergehenden Ansprüche,
**dadurch gekennzeichnet,**
**dass** der Durchmesser des verwendeten Dorns (17), zumindest innerhalb der Öffnung (14), zumindest näherungsweise, dem ersten Innendurchmesser (Dk) abzüglich eines minimalen Spiels entspricht.

7. Verfahren nach einem der vorhergehenden Ansprüche,
**dadurch gekennzeichnet,**
**dass** das Pressen des Rohlings (13) derart erfolgt, dass die Innendurchmesserabschnitte (3, 5) nach dem Pressen axial voneinander beabstandet sind, vorzugsweise derart, dass zwischen diesen eine innere, vorzugsweise nach radial außen spitz zulaufende, Umfangsnut (12), vorzugsweise mit einer maximalen Breite zwischen etwa 0,1mm und etwa 1mm, besonders bevorzugt zwischen etwa 0,3mm und etwa 0,7mm, realisiert ist.

8. Verfahren nach einem der vorhergehenden Ansprüche,
**dadurch gekennzeichnet,**
**dass** der Rohling (13) derart durch Pressen hergestellt wird, dass zwischen den Innendurchmesserabschnitten (3, 5) ein, vorzugsweise sich, insbesondere konisch, in Richtung des ersten Innendurchmesserabschnitts (3) verjüngender, Axialabschnitt (16) vorgesehen ist.

9. Verfahren nach einem der vorhergehenden Ansprüche,
**dadurch gekennzeichnet,**
**dass** die Innengewindeabschnitte (20, 21) definiert aufeinanderzu und/oder in Umfangsrichtung relativ zueinander verstellt werden.

10. Verfahren nach einem der vorhergehenden Ansprüche,
**dadurch gekennzeichnet,**
**dass** der Gewindegangauslauf (9) des ersten Innengewindeabschnittes (20) derart zu einem Gewindegangeinlauf (11) des zweiten Innengewindeabschnittes (21) durch Relativverstellen der Innengewindeabschnitte (20, 21) axial positioniert wird, dass ein Gewindesteigungssprung zwischen den Innendurchmesserabschnitten (3, 5) resultiert.

11. Verfahren nach einem der vorhergehenden Ansprüche,
**dadurch gekennzeichnet,**
**dass** die Innengewindeabschnitte (20, 21) derart relativ zueinander verstellt werden, dass der Gewindegangauslauf (9) des ersten Innengewindeabschnittes (20) in Umfangsrichtung zu einem Gewindegangeinlauf (11) des zweiten Innengewindeabschnittes (21) versetzt ist.

12. Verfahren nach einem der vorhergehenden Ansprüche,
**dadurch gekennzeichnet,**
**dass** die Innengewindeabschnitte (20, 21) derart relativ zueinander verstellt werden, dass der axiale Abstand zwischen dem Gewindegangauslauf (9) des ersten Innengewindeabschnittes (20) von dem Gewindegangeinlauf (11) des zweiten Innengewindeabschnittes (21) größer oder kleiner ist als die Gewindesteigung des ersten und des zweiten Innengewindeabschnittes (20, 21), und/oder größer oder kleiner ist als ein ganzzahliges Vielfaches der Gewindesteigung des ersten und des zweiten Innengewindeabschnittes (20,21).

13. Innengewindeelement, hergestellt mit einem Verfahren nach einem der vorhergehenden Ansprüche, mit einem ersten Innengewindeabschnitt (20) und mit einem über eine Umfangsnut (12) von dem ersten Innengewindeabschnitt (20) beabstandetem zweiten Innengewindeabschnitt (21), wobei die, vorzugsweise metrischen, Innengewinde (6) des ersten und des zweiten Innengewindeabschnitts (20, 21) die gleiche Steigung und die gleiche Gewindegröße und die gleiche Gangrichtung aufweisen und wobei ein Gewindegangauslauf (9) des ersten Innengewindeabschnittes (20) derart relativ zu einem Gewindegangeinlauf (11) des zweiten Innengewindeabschnittes (21) positioniert ist, dass beim Verschrauben des an jeder Stirnseite eine Auflagefläche (22, 23) aufweisenden Innengewindeelementes (1) mit einem Außengewindeelement (19) ein Bremsmoment resultiert,
**dadurch gekennzeichnet,**
**dass** die Innengewindeabschnitte (20, 21) die gleiche Axialerstreckung aufweisen und die stirnseitigen Auflageflächen (22, 23) gleich groß sind.

14. Innengewindeelement nach Anspruch 13,
**dadurch gekennzeichnet,**
**dass** die Umfangsnut (12) zwischen den Innengewindeabschnitten (20, 21) eine maximale Breite (a) aus einem Bereich zwischen etwa 0,1mm und etwa 1mm, vorzugsweise zwischen 0,3mm und 0,7mm aufweist und/oder dass die Wandstärke der Umfangswand (15) am Nutgrund der Umfangsnut (12) nur etwa 20% bis etwa 75%, vorzugsweise etwa 25% bis etwa 70%, bevorzugt etwa 35% bis etwa 65% der Wandstärke der Umfangswand (15) der Innengewindeabschnitte (20, 21) beträgt.

15. Schraubverbindung mit einem Innengewindeelement (1) nach Anspruch 12, das mit einem Außengewindeelement (19) verschraubt ist, derart, dass zwischen Innengewindeelement (1) und dem Außengewindeelement (19) ein Bremsmoment wirkt.

## Claims

1. A method for producing an internal thread element (1) with a first internal thread segment (20) and with a second internal thread segment (21), which is positioned relative to the first internal thread segment (20) such that on screwing together of the two internal thread segments (20, 21) with an external thread element (19) a braking torque results,
wherein the following method steps are carried out:
• producing a blank (13) by pressing, which has an opening (14), constructed as a through-opening, which has a first internal diameter segment (3) with a first internal diameter (Dk) and a second internal diameter segment (5) with a second internal diameter (Df) which is greater than the first internal diameter (Dk), and
• introducing a mandrel (17) into the opening (14), and
• pressing the blank (13) such that the fist and the second internal diameter segment (3, 5) after pressing have an identical, preferably the first, internal diameter (Dk), and such that a peripheral groove (12) is able to be realized between the first and second internal diameter segment (3, 5) after pressing, and
• removal of the mandrel (17) from the opening (14), and
• introducing of a first internal thread (4) into the first internal diameter segment (3) and introducing a second internal thread (6) into the second internal diameter segment (5), and thereby producing the internal thread segments (20, 21), wherein the, preferably metric, internal threads (6) of the first and second internal thread segment (20, 21) are produced with the same pitch and the same thread size and the same thread direction,
• relative adjustment of the internal thread segments (20, 21) to one another, such that a thread outlet (9) of the first internal thread segment (20) is positioned relative to a thread inlet (11) of the second internal thread segment (21) such that on screwing of the internal thread element (1), having a bearing surface (22, 23) on each end face, with an external thread element (19), the braking torque results,
**characterized in that**
the internal thread segments (20, 21) are produced with the same axial extent and the bearing surfaces (22, 23) of equal size.

2. The method according to Claim 1,
**characterized in that**
the internal thread element (1) is constructed with two identical end faces facing away from one another.

3. The method according to one of Claims 1 or 2,
**characterized in that**
the wall thicknesses of the peripheral walls, constructed from solid material, of the two internal thread segments (20, 21) are identical.

4. The method according to one of the preceding claims,
**characterized in that**
the blank (13) is pressed such that the outer contour of the internal thread segments (20, 21) is symmetrical to an imaginary plane of symmetry (E) running orthogonally to the longitudinal centre axis.

5. The method according to one of Claims 1 to 4,
**characterized in that**
the blank is produced by cold extrusion and/or that the blank is cold-extruded for the formation of the internal diameter segments (3, 5) with identical axial extent.

6. The method according to one of the preceding claims,
**characterized in that**
the diameter of the mandrel (17) which is used, at least within the opening (14), corresponds at least approximately to the first internal diameter (Dk), less a minimal play.

7. The method according to one of the preceding claims,
**characterized in that**
the pressing of the blank (13) takes place such that the internal diameter segments (3, 5) are spaced apart from one another axially after pressing, preferably such that between them an internal peripheral groove (12) is realized, preferably tapering radially outwards, preferably with a maximum width of between approximately 0.1 mm and approximately 1 mm, particularly preferably between approximately 0.3 mm and approximately 0.7 mm.

8. The method according to one of the preceding claims,
**characterized in that**
the blank (13) is produced by pressing such that between the internal diameter segments (3, 5) an axial segment (16) is provided, preferably narrowing, in particular conically, in the direction of the first internal diameter segment (3).

9. The method according to one of the preceding claims,
**characterized in that**
the internal thread segments (20, 21) are adjusted in a defined manner towards one another and/or relative to one another in peripheral direction.

10. The method according to one of the preceding claims,
**characterized in that**
the thread outlet (9) of the first internal thread segment (20) is positioned axially to a thread inlet (11) of the second internal thread segment (21) by relative adjustment of the internal thread segments (20, 21) such that a thread pitch jump results between the internal diameter segments (3, 5).

11. The method according to one of the preceding claims,
**characterized in that**
the internal thread segments (20, 21) are adjusted relative to one another such that the thread outlet (9) of the first internal thread segment (20) is offset in peripheral direction to a thread inlet (11) of the second internal thread segment (21).

12. The method according to one of the preceding claims,
**characterized in that**
the internal thread segments (20, 21) are adjusted relative to one another such that the axial distance between the thread outlet (9) of the first internal thread segment (20) from the thread inlet (11) of the second internal thread segment (21) is greater or smaller than the thread pitch of the first and of the second internal thread segment (20, 21), and/or is greater or smaller than an integral multiple of the thread pitch of the first and of the second internal thread segment (20, 21).

13. An internal thread element, produced by a method according to one of the preceding claims, with a first internal thread segment (20) and with a second internal thread segment (21) spaced apart from the first internal thread segment (20) via a peripheral groove (12), wherein the, preferably metric, internal threads (6) of the first and of the second internal thread segment (20, 21) have the same pitch and the same thread size and the same thread direction and wherein a thread outlet (9) of the first internal thread segment (20) is positioned relative to a thread inlet (11) of the second internal thread segment (21) such that on screwing of the internal thread element (1), having a bearing surface (22, 23) on each end face, with an external thread element (19), a braking torque results,
**characterized in that**
the internal thread segments (20, 21) have the same axial extent and the bearing surfaces (22, 23) on the end face are of equal size.

14. The internal thread element according to Claim 13,
**characterized in that**
the peripheral groove (12) between the internal thread segments (20, 21) has a maximum width (a) of a range between approximately 0.1 mm and approximately 1 mm, preferably between 0.3 mm and 0.7 mm, and/or that the wall thickness of the peripheral wall (15) at the groove bottom of the peripheral groove (12) is only approximately 20% to approximately 75%, particularly approximately 25% to approximately 70%, preferably approximately 35% to approximately 65% of the wall thickness of the peripheral wall (15) of the internal thread sections (20, 21).

15. A screwed connection with an internal thread element (1) according to Claim 12, which is screwed with an external thread element (19) such that a braking torque acts between internal thread element (1) and the external thread element (19).

## Revendications

1. Procédé de production d'un élément taraudé (1) comprenant une première portion taraudée (20) et comprenant une deuxième portion taraudée (21) qui est positionnée par rapport à la première portion taraudée (20) de telle sorte que, lorsque les deux portions taraudées (20, 21) sont vissées conjointement sur un élément fileté (19), il en résulte un couple de freinage, les étapes de procédé suivantes étant mises en oeuvre :
- production d'une ébauche (13) par matriçage, laquelle ébauche comprend une ouverture (14) réalisée en tant qu'ouverture traversante qui comprend une première portion de diamètre intérieur (3) présentant un premier diamètre intérieur (Dk) et une deuxième portion de diamètre intérieur (5) présentant un deuxième diamètre intérieur (Df) qui est supérieur au premier diamètre intérieur (Dk) et
- insertion d'un mandrin (17) dans l'ouverture (14) et
- matriçage de l'ébauche (13) de telle sorte que la première et la deuxième portion de diamètre intérieur (3, 5) présentent après le matriçage un même diamètre intérieur (Dk), de préférence le premier diamètre intérieur, et de telle sorte qu'une rainure périphérique (12) soit réalisée entre la première et la deuxième portion de diamètre intérieur (3, 5) après le matriçage et
- enlèvement du mandrin (17) hors de l'ouverture (14) et
- réalisation d'un premier taraudage (4) dans la première portion de diamètre intérieur (3) et réalisation d'un deuxième taraudage (6) dans la deuxième portion de diamètre intérieur (5) et production ainsi des portions taraudées (20, 21), les taraudages (6), de préférence métriques, de la première et de la deuxième portion taraudée (20, 21) étant produits avec le même pas et la même taille de filetage et le même sens de pas,
- déplacement relatif des portions taraudées (20, 21) l'une par rapport à l'autre de telle sorte qu'une sortie de filet (9) de la première portion taraudée (20) soit positionnée par rapport à une entrée de filet (11) de la deuxième portion taraudée (21) de telle sorte que, lorsque l'élément taraudé (1) comprenant une surface d'appui (22, 23) sur chaque côté frontal est vissé sur un élément fileté (19), il en résulte le couple de freinage, **caractérisé en ce que** les portions taraudées (20, 21) sont produites de manière à présenter la même étendue axiale et les surfaces d'appui frontales (22, 23) sont produites de manière à être de même taille.

2. Procédé selon la revendication 1, **caractérisé en ce que** l'élément taraudé (1) est réalisé avec deux côtés frontaux identiques opposés l'un à l'autre.

3. Procédé selon la revendication 1 ou 2, **caractérisé en ce que** les épaisseurs de paroi des parois périphériques, réalisées à partir d'un matériau massif, des deux portions taraudées (20, 21) sont identiques.

4. Procédé selon l'une quelconque des revendications précédentes, **caractérisé en ce que** l'ébauche (13) est matricée de telle sorte que le contour extérieur des portions taraudées (20, 21) soit symétrique par rapport à un plan de symétrie (E) imaginaire s'étendant perpendiculairement à l'axe médian longitudinal.

5. Procédé selon l'une quelconque des revendications 1 à 4, **caractérisé en ce que** l'ébauche est produite par matriçage à froid et/ou **en ce que** l'ébauche est matricée à froid pour réaliser les portions de diamètre intérieur (3, 5) de même étendue axiale.

6. Procédé selon l'une quelconque des revendications précédentes, **caractérisé en ce que** le diamètre du mandrin (17) utilisé correspond, au moins à l'intérieur de l'ouverture (14), au moins approximativement au premier diamètre intérieur (Dk) moins un jeu minimal.

7. Procédé selon l'une quelconque des revendications précédentes, **caractérisé en ce que** le matriçage de l'ébauche (13) s'effectue de telle sorte que les portions de diamètre intérieur (3, 5) soient espacées axialement l'une de l'autre après le matriçage, de préférence de telle sorte qu'une rainure périphérique (12) intérieure, de préférence se terminant en pointe radialement vers l'extérieur et présentant de préférence une largeur maximale entre environ 0,1 mm et environ 1 mm, de manière particulièrement préférée entre environ 0,3 mm et environ 0,7 mm, soit réalisée entre celles-ci.

8. Procédé selon l'une quelconque des revendications précédentes, **caractérisé en ce que** l'ébauche (13) est produite par matriçage de telle sorte qu'une portion axiale (16) se rétrécissant de préférence, notamment de manière conique, en direction de la première portion de diamètre intérieur (3) soit prévue entre les portions de diamètre intérieur (3, 5).

9. Procédé selon l'une quelconque des revendications précédentes, **caractérisé en ce que** les portions taraudées (20, 21) sont déplacées de manière définie l'une vers l'autre et/ou l'une par rapport à l'autre dans la direction périphérique.

10. Procédé selon l'une quelconque des revendications précédentes, **caractérisé en ce que** la sortie de filet (9) de la première portion taraudée (20) est positionnée axialement par rapport à une entrée de filet (11) de la deuxième portion taraudée (21) par déplacement relatif des portions taraudées (20, 21) de telle sorte qu'il en résulte un saut de pas de filetage entre les portions de diamètre intérieur (3, 5).

11. Procédé selon l'une quelconque des revendications précédentes, **caractérisé en ce que** les portions taraudées (20, 21) sont déplacées relativement l'une par rapport à l'autre de telle sorte que la sortie de filet (9) de la première portion taraudée (20) soit décalée dans la direction périphérique par rapport à une entrée de filet (11) de la deuxième portion taraudée (21).

12. Procédé selon l'une quelconque des revendications précédentes, **caractérisé en ce que** les portions taraudées (20, 21) sont déplacées relativement l'une par rapport à l'autre de telle sorte que la distance axiale entre la sortie de filet (9) de la première portion taraudée (20) et l'entrée de filet (11) de la deuxième portion taraudée (21) soit supérieure ou inférieure au pas de filetage de la première et de la deuxième portion taraudée (20, 21) et/ou soit supérieure ou inférieure à un multiple entier du pas de filetage de la première et de la deuxième portion taraudée (20, 21).

13. Élément taraudé, produit à l'aide d'un procédé selon l'une quelconque des revendications précédentes, comprenant une première portion taraudée (20) et comprenant une deuxième portion taraudée (21) espacée de la première portion taraudée (20) par une rainure périphérique (12), les taraudages (6), de préférence métriques, de la première et de la deuxième portion taraudée (20, 21) présentant le même pas et la même taille de filetage et le même sens de pas, et une sortie de filet (9) de la première portion taraudée (20) étant positionnée par rapport à une entrée de filet (11) de la deuxième portion taraudée (21) de telle sorte que, lorsque l'élément taraudé (1) comprenant une surface d'appui (22, 23) sur chaque côté frontal est vissé sur un élément fileté (19), il en résulte un couple de freinage, **caractérisé en ce que** les portions taraudées (20, 21) présentent la même étendue axiale et les surfaces d'appui frontales (22, 23) sont de même taille.

14. Élément taraudé selon la revendication 13, **caractérisé en ce que** la rainure périphérique (12) entre les portions taraudées (20, 21) présente une largeur maximale (a) dans une plage entre environ 0,1 mm et environ 1 mm, de préférence entre 0,3 mm et 0,7 mm, et/ou **en ce que** l'épaisseur de paroi de la paroi périphérique (15) au fond de la rainure périphérique (12) ne vaut qu'environ 20 % à environ 75 %, de préférence environ 25 % à environ 70 %, de manière préférée environ 35 % à environ 65 %, de l'épaisseur de paroi de la paroi périphérique (15) des portions taraudées (20, 21).

15. Assemblage par vissage comprenant un élément taraudé (1) selon la revendication 12, qui est vissé sur un élément fileté (19) de telle sorte qu'un couple de freinage agisse entre l'élément taraudé (1) et l'élément fileté (19).
